# EUROPÄISCHE PATENTSCHRIFT

(11) **EP 2 765 321 B1**
(45) Veröffentlichungstag und Bekanntmachung des Hinweises auf die Patenterteilung: **31.08.2016**
(21) Anmeldenummer: 14000408.6
(22) Anmeldetag: 04.02.2014
(51) Int. Cl.: F16D 3/60

(54) **Kupplungseinheit**
Coupling unit
Unité de couplage

(30) Priorität: 12.02.2013 DE 102013002253; 11.03.2013 DE 102013004090
(43) Veröffentlichungstag der Anmeldung: 13.08.2014
(73) Patentinhaber: Centa-Antriebe Kirschey GmbH, 42781 Haan (DE)
(72) Erfinder: Exner, Jochen, D-53773 Hennef (DE)
(74) Vertreter: Roche, von Westernhagen & Ehresmann

(56) Entgegenhaltungen:
- EP-A1- 0 035 283
- EP-A2- 0 034 440
- DE-A1- 3 545 991
- DE-A1- 3 613 808
- DE-A1- 4 017 938
- DE-C2- 4 205 666

## Beschreibung

Die Erfindung betrifft zunächst eine Kupplungseinheit nach dem Oberbegriff des Anspruches 1.

Kupplungseinheiten der gattungsgemäßen Art werden von der Anmelderin seit geraumer Zeit entwickelt und gefertigt.

Zu erwähnen ist beispielsweise eine gattungsgemäße Kupplungseinheit, wie sie in der DE 42 05 666 C2 offenbart ist. Hierbei handelt es sich um eine Gelenkhebelkupplung, bei der gelenkig zwischen An- und Abtrieb befestigte Hebel einen Winkel- und Axialversatz der miteinander verbundenen Aggregate bis zu einem gewissen Grad ausgleichen können. Die Lenker sind in Gummibuchsen gelagert, die in geringem Maße eine Dämpfungsfunktion ausüben. Die Anordnung von Gummielementen ist bei der in der zuletzt beschriebenen Druckschrift beschriebenen Kupplungseinheit erforderlich, um eine winkelige Stellung von An- und Abtrieb relativ zueinander zu ermöglichen. Die Gummibuchsen gleichen die Abstandsänderung zwischen den Befestigungsmitteln eines Lenkers während einer Umdrehung der Kupplungseinheit aus.

Eine weitere gattungsgemäße Kupplungseinheit ist in der nachveröffentlichten, auf die Anmelderin zurückgehende EP 2 557 327 A1 beschrieben. Dort ist bereits vorgeschlagen worden, das antriebsseitige Befestigungsmittel und das mit diesem mittels eines Verbindungselementes gekoppelte abtriebsseitige Befestigungsmittel hinsichtlich der antriebsseitigen Rotationsachse um 80° bis 100°, insbesondere von 80° bis 95°, und vorteilhafterweise insbesondere um im Wesentlichen 90°, umfangsbeabstandet zueinander anzuordnen. Hierdurch gelingt die Ausbildung eines sogenannten Gleichlaufgelenkes, mit dem höhere Drehmomente übertragen werden können als mit einer Kupplungseinheit des Standes der Technik.

Aus der DE 40 17 938 A1 geht eine Kupplungseinheit hervor, bei der ein Umfangswinkelversatz zwischen antriebsseitigem Befestigungsmittel und abtriebsseitigem Befestigungsmittel von 77° bekannt ist. Ein Umfangswinkelversatz zwischen 80° und 100° geht aus dieser Druckschrift nicht hervor.

Ausgehend von der eingangs erwähnten, vorveröffentlichten Kupplungseinheit des Standes der Technik liegt der Erfindung die Aufgabe zugrunde, die bekannte Kupplungseinheit derartig weiterzubilden, dass sie die Übertragung großer Drehmomente ermöglicht.

Die Erfindung löst diese Aufgabe mit den Merkmalen des Anspruches 1, und demgemäß insbesondere dadurch gekennzeichnet, dass das antriebsseitige Befestigungsmittel und das mit diesem mittels eines Verbindungselementes gekoppelte abtriebsseitige Befestigungsmittel hinsichtlich der antriebsseitigen Rotationsachse um 80° bis 100°, insbesondere um 85° bis 95°, weiter insbesondere um im wesentlichen 90°, umfangsbeabstandet zueinander angeordnet sind, und dass die Gelenkverbindung von mehreren, in Reihe geschalteten Gelenken bereitgestellt ist.

Die erfindungsgemäße Kupplungseinheit dient der Übertragung von Drehmomenten von einem Antrieb auf einen Abtrieb. Der Antrieb kann beispielsweise vom Schwungrad eines Motors und der Abtrieb von einer Welle gebildet sein.

Zur Verbindung der Kupplungseinheit mit dem Antrieb weist die Kupplung eine antriebsseitige Anschlussvorrichtung auf. Dies kann beispielsweise ein Flansch, insbesondere ein Ringkörper oder dergleichen sein. An der antriebsseitigen, d. h. fest mit dem Antrieb verbundenen Anschlussvorrichtung, ist eine Mehrzahl antriebsseitiger Befestigungsmittel angeordnet. Diese sind um eine antriebsseitige Rotationsachse herum angeordnet. Die antriebsseitige Rotationsachse bezeichnet diejenige geometrische Achse, um die herum die antriebsseitige Anschlussvorrichtung drehbar ist.

Zur Verbindung der Kupplungseinheit mit dem Abtrieb weist die Kupplungseinheit eine abtriebsseitige Anschlussvorrichtung auf. Auch diese kann z. B. von einem Flansch oder einem anderen Körper gebildet sein. Die abtriebsseitige Anschlussvorrichtung ist fest mit dem Abtrieb, also z. B. mit der angetriebenen Welle, verbunden. Die abtriebsseitige Anschlussvorrichtung weist ebenfalls eine Mehrzahl abtriebsseitiger Befestigungsmittel auf.

Die erfindungsgemäße Kupplungseinheit umfasst darüber hinaus eine Mehrzahl von Verbindungselementen. Hierbei kann es sich beispielsweise um Lenker oder Kupplungsstangen handeln. Jedes Verbindungselement ist einerseits mit einem antriebsseitigen Befestigungsmittel und andererseits mit einem abtriebsseitigen Befestigungsmittel, jeweils mittels einer Gelenkverbindung verbunden.

Soweit im Folgenden im Rahmen dieser Patentanmeldung von Lenkern gesprochen wird, bezeichnet dieser Begriff Verbindungselemente ganz allgemein.

Das antriebsseitige Befestigungsmittel und das mit diesem mittels eines Verbindungselementes gekoppelte abtriebsseitige Befestigungsmittel sind umfangsbeabstandet zueinander angeordnet. Die Umfangsbeabstandung beträgt hinsichtlich der antriebsseitigen Rotationsachse etwa 80° bis 100°, vorteilhafterweise zwischen 85° und 95°, und insbesondere etwa oder im Wesentlichen 90°.

Durch diesen besonderen Umfangsversatz, bzw. Umfangsabstand kann eine Konstruktion erreicht werden, bei der sich der Abstand der Befestigungselemente von Antrieb und Abtrieb bei einer Umdrehung der Kupplungseinheit nicht ändert. Hierdurch wird ein Gleichlaufgelenk ausgebildet, welches ohne Zwischenschaltung längenausgleichender Elastomer-Elemente auskommt.

Ein wesentliches Merkmal der Erfindung besteht darin, dass die Gelenkverbindung von mehreren in Reihe geschalteten Gelenken bereitgestellt ist.

Die Gelenkverbindung, mit der das Verbindungselement mit dem antriebsseitigen Befestigungsmittel gekoppelt ist, sowie gleichermaßen die Gelenkverbindung, mit der das Verbindungselement mit dem abtriebsseitigen Befestigungsmittel gekoppelt ist, ist in der eingangs erwähnten, nachveröffentlichten europäischen Patentanmeldung der Anmelderin von einer sphärischen Gelenkverbindung bereitgestellt, die drei rotatorische Freiheitsgerade ermöglicht.

Die Erfindung erkennt, dass entlang der drei unterschiedlichen, aufeinander senkrecht stehenden Drehachsen bei einer gattungsgemäßen Kupplungseinheit im Betrieb unterschiedliche Arbeitswinkel auftreten. Weiter erkennt die Erfindung, dass zur Optimierung der Arbeitswinkel, bzw. der Arbeitswege eine in der nachveröffentlichten Patentanmeldung vorbeschriebene sphärische Gelenkverbindung durch mehrere in Reihe, d. h. hintereinander geschaltete, Gelenke ersetzt werden kann. Hierdurch kann einerseits eine konstruktive Optimierung des Verbindungselementes und der Gelenkverbindungen erfolgen. Zum Anderen kann in Anpassung an gewünschte Anwendungsfälle oder Einsatzzwecke eine Optimierung der einzelnen Gelenke an die Anforderungen für diesen Einsatzzweck erfolgen.

Insbesondere ist es gewünscht, eine Kupplungseinheit bereitzustellen, die bei hohen Drehzahlen eine lange Lebensdauer gewährleitstet.

Die erfindungsgemäß aus mehreren in Reihe geschalteten Gelenken bestehende Gelenkverbindung kann aus unterschiedlichen, in Reihe geschalteten Lagern gebildet sein. Es kann sich dabei um eine Kombination aus mehreren unterschiedlichen Lagern handeln, wobei diese Kombination z. B. wenigstens ein Drehlager umfassen kann, insbesondere ein Wälzlager, aber beispielsweise auch ein Pendelrollenlager oder ein Pendelkugellager oder beispielsweise auch ein Torsionsgelenk.

Von wesentlicher Bedeutung ist, dass die Gelenkverbindung aus mehreren in Reihe geschalteten Gelenken eine Verlagerbarkeit eines Endes des Lenkers relativ zu dem, dem anderen Ende des Lenkers benachbarten Befestigungsmittel entlang drei rotatorischer Freiheitsgrade ermöglicht.

Hier kann bei einer besonders vorteilhaften Ausgestaltung der Erfindung vorgesehen sein, dass wenigstens ein Gelenk von einem Drehlager bereitgestellt ist. Als Drehlager im Sinne der vorliegenden Patentanmeldung wird ein im Schrifttum auch als Radiallager bezeichnetes Lager bezeichnet, welches eine rotatorische Bewegung im Wesentlichen nur um eine Rotationsachse, die sogenannte Drehlagerachse, zulässt.

Im Sinne dieser Ausgestaltung der Erfindung kann das in der nachveröffentlichten Patentanmeldung vorbeschriebene sphärische Gelenk beispielsweise ersetzt werden durch drei in Reihe geschaltete Drehlager, deren jeweilige Drehlagerachsen zueinander senkrecht stehen.

Bei einer vorteilhaften Ausgestaltung der Erfindung ist insbesondere das dem abtriebsseitigen Befestigungsmittel und/oder dem antriebsseitigen Befestigungsmittel nächste Gelenk der mehreren in Reihe geschalteten Gelenke als Drehlager ausgebildet. Die Drehlagerachse ist dabei insbesondere im Wesentlichen senkrecht zur antriebsseitigen Rotationsachse ausgebildet. Diese Ausgestaltung berücksichtigt, dass um diese Drehlagerachse herum die größten Arbeitswinkel, bzw. Arbeitswege im Betrieb der Kupplungseinheit auftreten.

Gemäß einer vorteilhaften, Ausgestaltung der Erfindung weist das Drehlager Schmiermittel auf. Hierdurch kann die Lebensdauer des Gelenkes deutlich erhöht werden.

Als Schmiermittel kommen insbesondere Trocken-Schmiermittel in Betracht. Ein solches Trocken-Schmiermittel kann auch von einer besonderen Beschichtung bereitgestellt sein.

Gemäß einer weiteren vorteilhaften Ausgestaltung der Erfindung weist das Drehlager eine Lagerschale und eine darin um eine Drehlagerachse drehbare Lagerwelle auf. Diese Ausgestaltung bietet die Möglichkeit, die Lagerschale fest zu dem antriebsseitigen Befestigungsmittel, bzw. fest relativ zu dem abtriebsseitigen Befestigungsmittel anzuordnen.

Gemäß einer weiteren vorteilhaften Ausgestaltung der Erfindung ist das Drehlager von einem Wälzlager bereitgestellt. Dies ermöglicht einerseits eine sehr hohe Lebensdauer und zum Anderen einen Rückgriff auf kommerziell erhältliche Lager.

Weiter vorteilhaft ist das Wälzlager von einem Nadellager gebildet.

Gemäß einer weiteren vorteilhaften Ausgestaltung der Erfindung ist wenigstens ein Gelenk von einem Pendelrollenlager oder einem Pendelkugellager bereitgestellt. Ein solches Gelenk kann neben einer Drehbewegung um eine erste Achse auch noch eine Kippbewegung um eine zweite Achse, die sogenannte Kippachse, zulassen, die zu der Drehachse senkrecht steht. Die Ausgestaltung ermöglicht es, die Gelenkverbindung von mehreren in Reihe geschalteten Gelenken bereitzustellen, dabei aber auf eine möglichst geringe Anzahl von Lagern zurückzugreifen.

Gemäß einer weiteren vorteilhaften Ausgestaltung der Erfindung ist die Drehlagerachse im Wesentlichen senkrecht zu der antriebsseitigen Rotationsachse ausgerichtet.

Diese Ausgestaltung berücksichtigt, dass um diese Drehlagerachse herum beim Betrieb der Kupplungseinheit die größten Arbeitswinkel auftreten.

Gemäß einer weiteren vorteilhaften Ausgestaltung der Erfindung weist jeweils ein Verbindungselement ein erstes Drehlager mit einer ersten Lagerschale und einer darin um eine erste Drehlagerachse drehbaren ersten Lagerwelle und ein zweites Drehlager mit einer zweiten Lagerschale und einer darin um eine zweite Drehlagerachse drehbaren zweiten Lagerwelle auf, wobei die erste Lagerschale fest relativ zu dem antriebsseitigen Befestigungsmittel und wobei die zweite Lagerschalte fest relativ zu dem abtriebsseitigen Befestigungsmittel angeordnet ist. Hierdurch kann bei einer im Wesentlichen, bezogen auf eine Mittelebene des Verbindungselementes symmetrischen Ausgestaltung des Verbindungselementes eine einfache Konstruktion erreicht werden.

Die erste Drehlagerachse und die zweite Drehlagerachse sind vorteilhafterweise parallel zueinander ausgerichtet. Dies ermöglicht eine besonders einfache Konstruktion.

Gemäß einer weiteren vorteilhaften Ausgestaltung der Erfindung ist die Lagerwelle fest mit einem Kugelflächenabschnitt verbunden. Der Kugelflächenabschnitt kann beispielsweise von einem Ösenabschnitt des Verbindungselementes übergriffen sein. Die Kupplungseinheit kann insoweit ein erstes, von dem oben beschriebenen Drehlager, insbesondere Wälzlager, bereitgestelltes Gelenk, und ein zweites, zu dem Drehlager in Reihe geschaltetes Gelenk umfassen, welches von dem Kugelflächenabschnitt und dem Ösenabschnitt bereitgestellt ist.

Während das Drehlager beim Betrieb der Kupplungseinheit auftretende Arbeitswinkel von beispielsweise 6° bis 15°, insbesondere 6° bis 12°, insbesondere vorteilhafterweise zwischen 8° und 11°, zulassen kann, kann das von Kugelflächenabschnitt und Ösenabschnitt gebildete zweite Gelenk erheblich geringere Arbeitswinkel von beispielsweise nur ein oder zwei Grad zulassen, wobei die von dem zweiten Gelenk zugelassene Drehbewegung um eine Drehachse erfolgt, die im Wesentlichen senkrecht zur Drehlagerachse des Drehlagers steht.

Gemäß einer vorteilhaften Ausgestaltung der Erfindung kann ein weiteres Gelenk von einem Torsionsgelenk bereitgestellt sein. Das Torsionsgelenk kann beispielsweise von einem insgesamt drehweich oder torsionsweich ausgestalteten Verbindungselement bereitgestellt sein. Hierzu kann das Verbindungselement bezogen auf seine Längsmittelachse in einem Mittenbereich eine Sollbiegestelle aufweisen, die beispielsweise von einer Querschnittsverjüngung des Verbindungselementes ausgebildet wird. Hierzu kann vorgesehen sein, dass erstes Ende des Verbindungselementes relativ zu einem zweiten Ende des Verbindungselementes um eine Längsmittelachse des Verbindungselementes tordierbar ausgebildet ist. Dies ermöglicht eine besonders einfache Konstruktion eines Verbindungselementes und die Möglichkeit, die Zahl der insgesamt vorzusehenden Gelenke in einem Verbindungselement gering zu halten.

Anstelle eines Verbindungselementes des Standes der Technik, welches beider Ends über eine sphärische Gelenkverbindung an dem antriebsseitigen Befestigungsmittel einerseits und an dem abtriebsseitigen Befestigungsmittel andererseits angebunden ist, kann erfindungsgemäß ein Verbindungselement beider Ends jeweils ein Drehlager aufweisen, sowie ein zweites Gelenk, welches z. B. durch einen Kugelflächenabschnitt und einen Ösenabschnitt bereitgestellt ist, oder welches jedenfalls eine Kippbewegung oder Schwenkbewegung um eine zu der Drehlagerachse des ersten Gelenkes senkrechte Achse zulässt, und ein drittes Gelenk, bereitgestellt z. B. durch ein tordierbares Verbindungselement, um die gleiche Anzahl an Freiheitsgraden zu ermöglichen, wie ein sphärisches Gelenk.

Gemäß einer vorteilhaften Ausgestaltung der Erfindung sind die antriebsseitigen Befestigungsmittel in einer gemeinsamen Radialebene der antriebsseitigen Rotationsachse angeordnet. Vorteilhaft sind die antriebsseitigen Befestigungsmittel auf einem gemeinsamen Radius um die antriebsseitige Rotationsachse angeordnet.

Weiter vorteilhaft weist die abtriebsseitige Anschlussvorrichtung eine antriebsseitige Rotationsachse auf. Weiter vorteilhaft sind die abtriebsseitigen Befestigungsmittel in einer gemeinsamen Radialebene der abtriebsseitigen Rotationsachse angeordnet.

Schließlich kann weiter vorteilhaft vorgesehen sein, dass die abtriebsseitigen Befestigungsmittel auf einem gemeinsamen Radius um die abtriebsseitige Rotationsachse herum angeordnet sind.

Schließlich kann vorteilhaft vorgesehen sein, dass der Radius, auf welchem die antriebsseitigen Befestigungsmittel um die antriebsseitige Rotationsachse herum angeordnet sind, und der Radius, auf welchem die abtriebsseitigen Befestigungsmittel um die abtriebsseitige Rotationsachse herum angeordnet sind, betragsmäßig identisch sind.

Die Zahl der Verbindungselemente kann beliebig gewählt werden. Vorteilhafterweise können Verbindungselement-Terzette vorgesehen sein, so dass jeweils zwischen einer antriebsseitigen Anschlussvorrichtung und einer abtriebsseitigen Anschlussvorrichtung drei Verbindungselemente vorgesehen sind.

Vorteilhafterweise sind die jeweils zwischen einer antriebsseitigen Anschlussvorrichtung mit einer abtriebsseitigen Anschlussvorrichtung vorgesehenen Lenker in Umfangsrichtung äquidistant voneinander angeordnet.

Eine Kupplungseinheit gemäß der Erfindung ist vorteilhaft derartig weitergebildet, dass sie die Übertragung großer Drehmomente ermöglicht.

Hierzu kann vorgesehen sein, dass das antriebsseitige Befestigungsmittel und das mit diesem mittels eines Verbindungselementes gekoppelte abtriebsseitige Befestigungsmittel hinsichtlich der antriebsseitigen Rotationsachse um 80° bis 100°, insbesondere um 85° bis 95°, weiter insbesondere um im Wesentlichen 90°, umfangsbeabstandet zueinander angeordnet sind, und dass das Verbindungselement jeweils im Wesentlichen hantelförmig ausgebildet ist und mittig eine Querschnittsverjüngung oder Querschnittschwächung aufweist.

Durch die hantelförmige Ausbildung und einer mittig - bezogen auf eine Längsmittelachse des Lenkers vorgesehene Querschnittsschwächung - wird eine tordierbare Ausgestaltung des Verbindungselementes möglich. Hierdurch kann ein Verzicht auf Drehlagergelenke, insbesondere auch ein Verzicht auf sphärische Gelenke, erreicht werden, ohne die Zahl der Freiheitsgrade zu reduzieren.

Durch die im Wesentlichen hantelförmige Ausbildung des Verbindungselementes gelingt es, im Bereich der Enden des Verbindungselementes mehrere, insbesondere zwei, in Reihe geschaltete Gelenke, z. B. ein Drehlager und ein einen Kugelabschnitt aufweisendes Gelenk, unterzubringen.

Eine erfindungsgemäße Kupplungseinheit ist vorteilhaft derartig weitergebildet, dass sie die Übertragung großer Drehmomente ermöglicht.

Hierzu kann vorgesehen sein, dass das antriebsseitige Befestigungsmittel und das mit diesem mittels eines Verbindungselementes gekoppelte abtriebsseitige Befestigungsmittel hinsichtlich der antriebsseitigen Rotationsachse um 80° bis 100°, insbesondere um 85° bis 95°, weiter insbesondere um im Wesentlichen 90°, umfangsbeabstandet zueinander angeordnet sind, und dass das Verbindungselement tordierbar ausgebildet ist, derart, dass sein erstes, an der antriebsseitigen Befestigungsstelle gelenkig angebundenes Ende relativ zur seinem zweiten, an der abtriebsseitigen Befestigungsstelle gelenkig angebundenen Ende um eine Längsmittelachse des Verbindungselementes verdrehbar ist.

Das Prinzip besteht im Wesentlichen darin, dass das Verbindungselement tordierbar ausgestaltet ist. Die tordierbare Ausgestaltung kann insbesondere durch eine drehweiche Ausbildung des Verbindungselementes erreicht werden. Dies ermöglicht eine Verdrehung seines ersten Endes relativ zu seinem zweiten Ende. Hierdurch kann die Zahl der Gelenke an einem Verbindungselement insgesamt gering gehalten werden.

Die Erfindung betrifft des Weiteren eine Kupplungseinheit nach dem Oberbegriff des Anspruches 15. Der Erfindung liegt wiederum die Aufgabe zugrunde, die bekannte Kupplungseinheit derartig weiterzubilden, dass sie die Übertragung großer Drehmomente ermöglicht.

Die Erfindung löst diese Aufgabe mit den Merkmalen des Anspruches 15, insbesondere mit denen des Kennzeichenteils, und ist insbesondere dadurch gekennzeichnet, dass das antriebsseitige Befestigungsmittel und das mit diesem mittels eines Verbindungselementes gekoppelte abtriebsseitige Befestigungsmittel hinsichtlich der antriebsseitigen Rotationsachse um 80° bis 100°, insbesondere um 85° bis 95°, weiter insbesondere um im Wesentlichen 90°, umfangsbeabstandet zueinander angeordnet sind, und dass die Gelenkverbindung ein eine Drehbewegung nur um eine Drehlagerachse zulassendes Drehlager aufweist.

Das Prinzip der Erfindung besteht im Wesentlichen darin, die Gelenkverbindung derartig auszubilden, dass sie zumindest ein Drehlager aufweist, welches eine Drehbewegung nur um eine Drehlagerachse zulässt. Durch diese spezielle, optimierte konstruktive Ausgestaltung des Lagers kann erreicht werden, dass ein Wälzlager vorgesehen wird. Dieses kann eine hohe Lebensdauer eine Kupplungseinheit auch bei einer Übertragung großer Drehmomente bei hoher Drehzahl ermöglichen.

Gemäß einer weiteren vorteilhaften Ausgestaltung der Erfindung sind zwei Kupplungseinheiten der vorbeschriebenen Art unter Zuhilfenahme einer Welle miteinander verbunden. Hierdurch besteht die Möglichkeit, eine Kupplungseinheit bereitzustellen, die auch einen Radialversatz zwischen Antrieb und Abtrieb zulässt, bzw. ausgleichen kann. Eine solche doppelkardanische Ausbildung ist an sich aus dem Stand der Technik bekannt, jedoch nicht unter Bereitstellung der besonderen Geometrie der antriebsseitigen und abtriebsseitigen Befestigungsmittel und der Verbindungselemente.

Bezüglich der oben beschriebenen Kupplungseinheiten, auch sofern diese unterschiedlichen oder unabhängigen Ansprüchen entspringen, gilt, dass die unterschiedlichen Kupplungseinheiten auch einzelne oder mehre Merkmale der jeweils anderen beschriebenen Kupplungseinheiten aufweisen können. Auch für die nachfolgende Figurenbeschreibung der Ausführungsbeispiele gilt, dass Merkmale, auch soweit sie nur bei einem Ausführungsbeispiel beschrieben sind, auch bei anderen Ausführungsbeispielen vorgesehen sein können.

Weitere Vorteile der Erfindung ergeben sich anhand der nicht zitierten Unteransprüche und aus der nachfolgenden Beschreibung der in den Figuren dargestellten Ausführungsbeispiele. Darin zeigen:
- Fig. 1: ein Ausführungsbeispiel einher erfindungsgemäßen Kupplungseinheit in doppelkardanischer Ausgestaltung in einer perspektivischen, schematischen Ansicht,
- Fig. 1a: das Ausführungsbeispiel der Fig. 1 gemäß Ansichtspfeil Ia in Fig. 1 in einer weiter schematisierten Ansicht,
- Fig. 2: sehr schematisch die Kupplungseinheit der Fig. 1 a gemäß Ansichtspfeil II-II in Fig. 1a, wobei die Welle und die in Fig. 1a linke Kupplungseinheit weggelassen sind,
- Fig. 3: das Ausführungsbeispiel der Kupplungseinheit der Fig. 2 in einer vereinfachten schematischen Ansicht etwa gemäß Ansichtspfeil III in Fig. 2 in Einzeldarstellung,
- Fig. 4: ein Verbindungselement einer erfindungsgemäßen Kupplungseinheit, sehr schematisch dargestellt, in schematischer Einzel-Ansicht,
- Fig. 5: das Verbindungselement der Fig. 4 etwa gemäß Ansichtspfeil V in Fig. 4 in Unteransicht,
- Fig. 6: eine teilgeschnittene, schematische Ansicht durch das Verbindungselement der Fig. 5, etwa entlang Schnittlinie VI-VI,
- Fig. 7: eine teilgeschnittene, schematische Ansicht durch das Verbindungselement der Fig. 5, etwa entlang Schnittlinie VII-VII,
- Fig. 8: eine teilgeschnittene, schematische Ansicht durch das Verbindungselement etwa entlang Schnittlinie VIII-VIII in Fig. 6,
- Fig. 9: eine teilgeschnittene, schematische Ansicht durch das Verbindungselement, etwa entlang Schnittlinie IX-IX in Fig. 5,
- Fig. 10: eine schematische Prinzipskizze, die in einer räumlichen Ansicht unter Verwendung von schematischen Schaltsymbolen für die unterschiedlichen Lager die Reihenschaltung von Gelenken gemäß der Erfindung veranschaulichen soll, und
- Fig. 11: in einer Darstellung vergleichbar der Darstellung der Fig. 10 eine Prinzip-Skizze eines weiteren schematischen Ausführungsbeispiels.

Die in ihrer Gesamtheit in den Zeichnungen mit 10 bezeichnete Kupplungseinheit wird nachfolgend anhand der Ausführungsbeispiele in den Zeichnungen beschrieben. Der nachfolgenden Beschreibung sei vorausgeschickt, dass der Übersichtlichkeit halber gleiche oder miteinander vergleichbare Teile oder Elemente, auch soweit sie unterschiedlichen Ausführungsbeispielen zuzuordnen sind, mit gleichen Bezugszeichen, teilweise unter Hinzufügung kleiner Buchstaben bezeichnet sind.

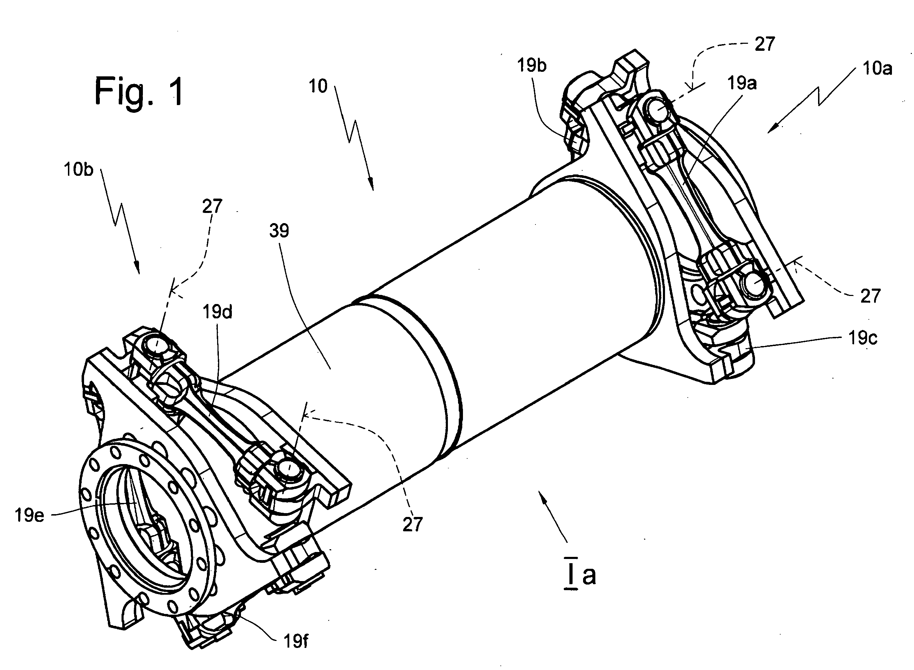

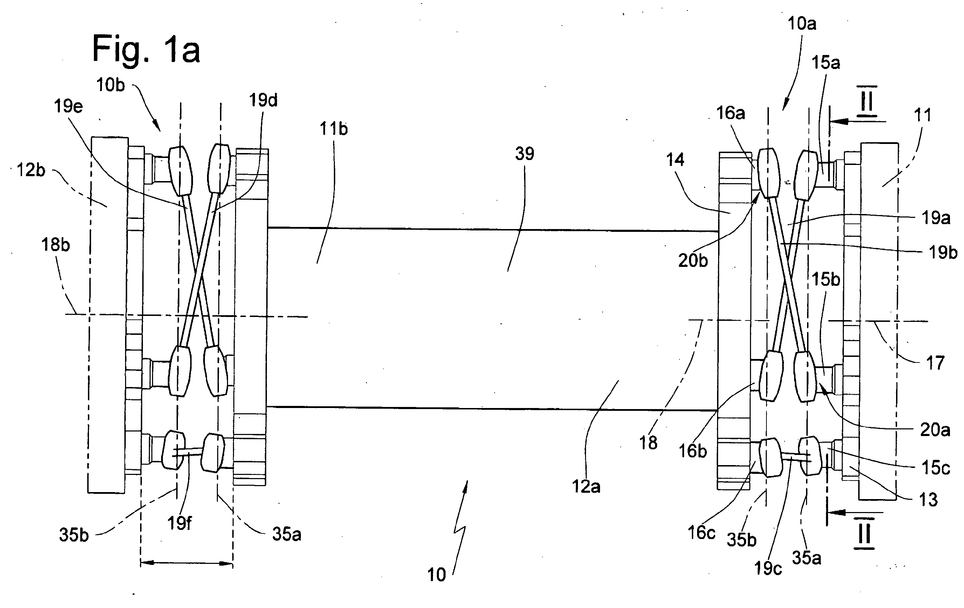

Die Kupplungseinheit der Fig. 1 ist insgesamt mit 10 bezeichnet und umfasst eine erste Kupplungseinheit 10a und eine zweite Kupplungseinheit 10b, zwischen denen eine Welle 39 angeordnet ist. Die Kupplungseinheit 10 ist gegenüber der Darstellung der Fig. 1 in Fig. 1a weiter schematisiert in einer teilgeschnittenen schematischen Ansicht dargestellt.

Die Kupplungseinheit 10a der Fig. 1 a dient der Verbindung eines lediglich schematisch dargestellten Antriebs 11 mit einem Abtrieb 12a. Der Abtrieb 12a beim Ausführungsbeispiel der Fig. 1a wird von der Welle 39 bereitgestellt, und stellt zugleich den Antrieb 11 b für die Kupplungseinheit 10b dar. Die Kupplungseinheit 10b dient der Verbindung des Antriebs 11b mit dem nur schematisch dargestellten Abtrieb 12b.

Die Welle 39 ist also in der Terminologie der vorliegenden Patentanmeldung der Abtrieb 12a der ersten Kupplungseinheit 10a und zugleich der Antrieb 11b der zweiten Kupplungseinheit 10b.

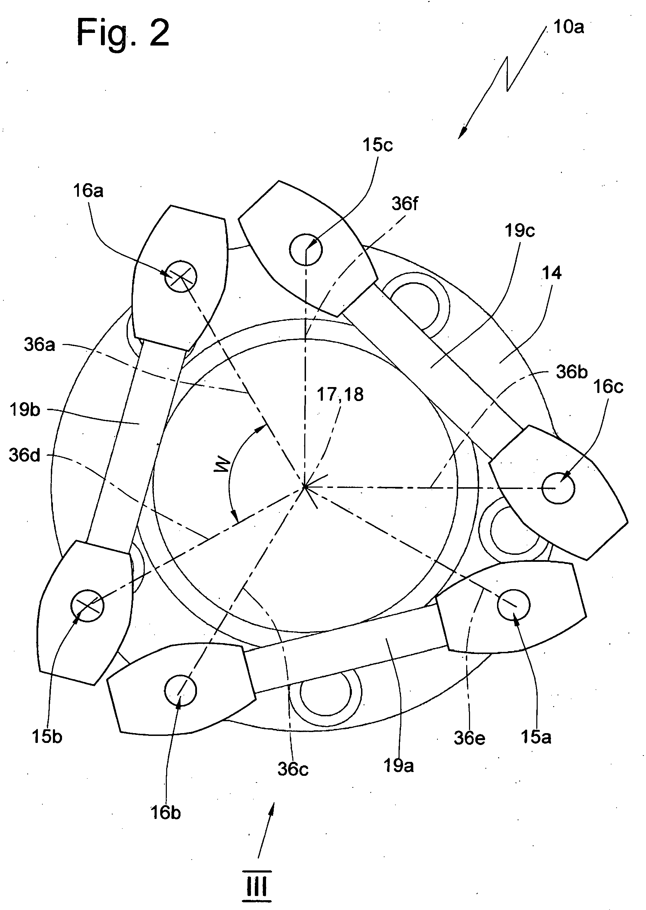

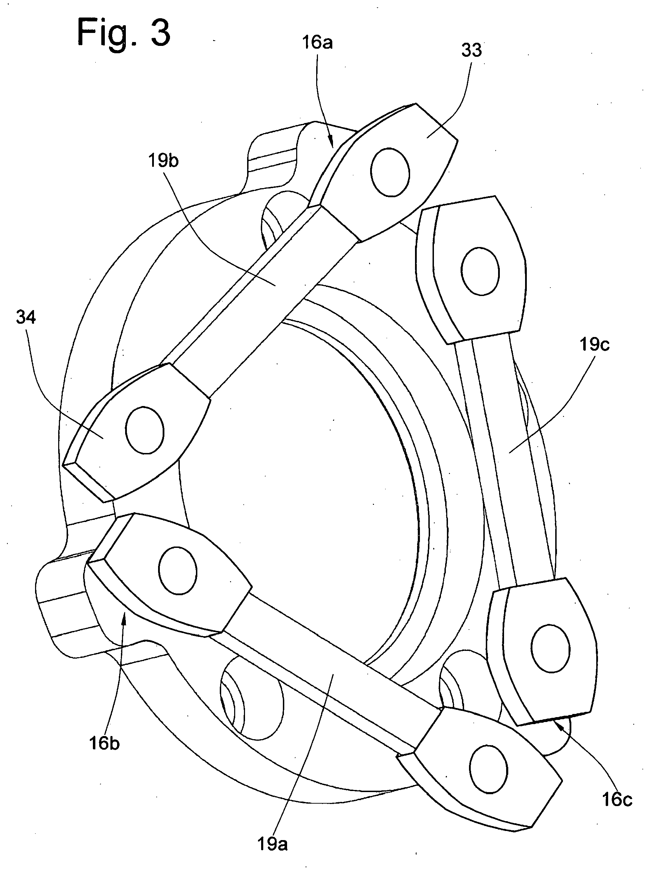

Während das Ausführungsbeispiel der Figuren 1 und 1a eine doppelkardanische Anordnung von zwei Kupplungseinheiten 10, 10a, zeigt, ist bei anderen Ausführungsbeispielen der Erfindung jeweils nur eine Kupplungseinheit 10 vorgesehen. Eine solche Ausführungsform soll zunächst anhand der Figuren 2 und 3, nämlich anhand der rechten Küpplungseinheit 10a der Fig. 1a, beschrieben werden.

Eine Kupplungseinheit 10a weist eine antriebsseitige Anschlussvorrichtung 13 auf, die fest mit dem Antrieb 11 verbunden ist. Es kann sich dabei beispielsweise um einen in Fig. 2 erkennbaren, ringförmigen Flansch 14 handeln. Fig. 2 zeigt allerdings - entsprechend der Sichtweise des Ansichtspfeils II-II in Fig. 1a - den abtriebsseitigen Flansch 14. Der dieser Kupplungseinheit 10a zugeordnete antriebsseitige ringförmige Flansch 13 ist allerdings identisch zu dem abtriebsseitigen Flansch 14, der die abtriebsseitige Anschlussvorrichtung bereitstellt, ausgebildet.

An dem Flansch 13 sind antriebsseitige Befestigungsmittel 15a, 15b, 15c angeordnet. Die antriebsseitigen Befestigungsmittel 15 sind fest mit der antriebsseitigen Anschlussvorrichtung 13 verbunden. Die antriebsseitigen Befestigungsmittel 15 können beispielsweise von Halterungselementen bereitgestellt sein, an denen die später zu beschreibenden Lagerschalen 25 von Drehgelenken fest angebunden sind.

Die antriebsseitige Anschlussvorrichtung 13 ist fest mit dem Antrieb 11 verbunden. Der Antrieb 11 kann beispielsweise von dem Schwungrad eines Motors bereitgestellt sein.

Die Kupplungseinheit 10a weist darüber hinaus eine abtriebsseitige Anschlussvorrichtung 14 auf. Diese ist ihrerseits fest mit dem Abtrieb 12a verbunden. Die abtriebsseitige Anschlussvorrichtung 14 weist abtriebsseitige Befestigungsmittel 16a, 16b, 16c auf, die jeweils fest mit der abtriebsseitigen Anschlussvorrichtung 14 verbunden sind.

Fig. 1 a macht deutlich, dass jeweils eine antriebsseitige Befestigungsstelle (z. B. die antriebsseitige Befestigungsstelle 15a), mit jeweils einer abtriebsseitigen Befestigungsstelle (gemäß Fig. 1a mit der Befestigungsstelle 16b) durch ein Verbindungselement 19a verbunden ist. Bei dem Ausführungsbeispiel der Figuren weist jede Kupplungseinheit 10a jeweils drei Verbindungselemente 19a, 19b, 19c auf, die auch als Lenker bezeichnet werden.

Auch die bezogen auf Fig. 1a linke Kupplungseinheit 10b weist drei Lenker 19d, 19e, 19f auf.

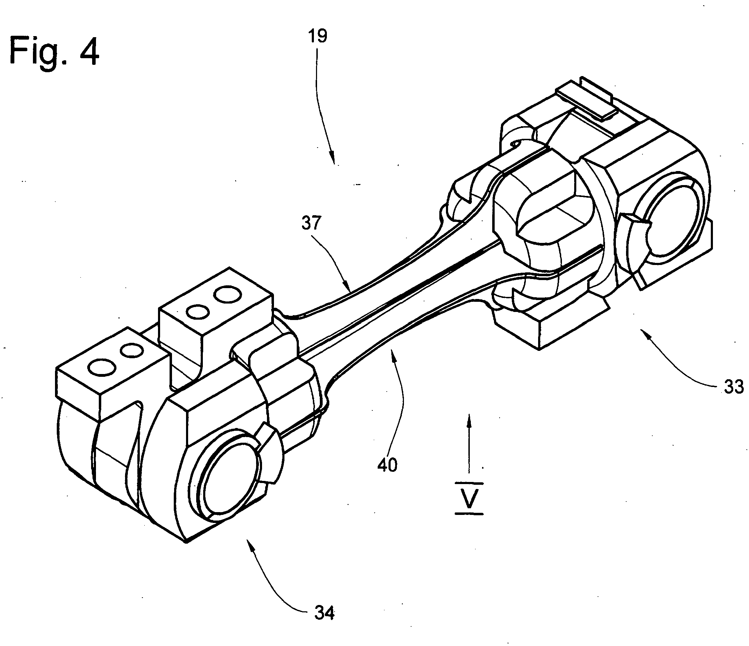

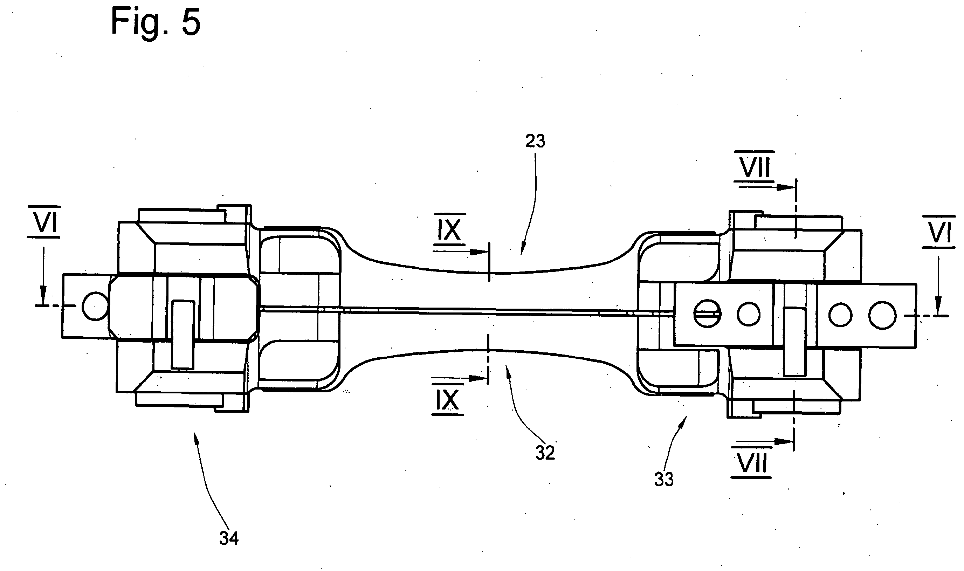

Die Figuren 1a, 2 und 3 zeigen die Lenker 19a, 19b, 19c jeweils nur sehr schematisch. Die Figuren 4 bis 9 zeigen jeweils einen Lenker 19 in einer demgegenüber detaillierteren Darstellung.

Der antriebsseitigen Anschlussvorrichtung 13 ist eine antriebsseitige Rotationsachse 17 und der abtriebsseitigen Anschlussvorrichtung 14 ist eine abtriebsseitige Rotationsachse 18 zugeordnet.

Bei den Ausführungsbeispielen der Figuren 1 a und 2 sind die antriebsseitige Rotationsachse 17 und die abtriebsseitige Rotationsachse 18 in Flucht miteinander angeordnet. Die Kupplungseinheit 10a dient jedoch gerade dazu Axialversatz, Radialversatz oder Winkelversatz auszugleichen. Die antriebsseitige Rotationsachse 17 und die abtriebsseitige Rotationsachse 18 können daher auch winkelig zueinander oder auch parallel zueinander stehen.

Bei einer doppelkardanischen Anordnung von zwei Kupplungseinheiten 10a, 10b gemäß Fig. 1 und 1 a können die antriebsseitige Rotationsachse 17 der ersten Kupplungseinheit 10a und die abtriebsseitige Rotationsachse 18b der zweiten Kupplungseinheit 10b unter einem entsprechend vergrößerten Axialversatz oder Winkelversatz stehen, bzw. auch einen Radialversatz ausgleichen.

Fig. 2 macht deutlich, dass die abtriebsseitigen Befestigungsmittel 16a, 16b, 16c unter einem gleichen Radius 36a, 36b, 36c, bezogen auf die abtriebsseitige Rotationsachse 18 angeordnet sind.

Auch die in Fig. 2 nicht dargestellten antriebsseitigen Befestigungsmittel 15a, 15b, 15c sind unter dem gleichen Radius 36d, 36e, 36f, bezogen auf die antriebsseitige Rotationsachse 17 angeordnet.

Fig. 2 zeigt lediglich die abtriebsseitigen Befestigungsmittel 16a, 16b, 16c der Kupplungseinheit 10a, und deutet die Positionen der antriebsseitigen Befestigungsmittel 15a, 15b, 15c lediglich an.

Sämtliche antriebsseitigen Befestigungsmittel 15a, 15b, 15c und sämtliche abtriebsseitigen Befestigungsmittel 16a, 16b, 16c sind jeweils in einer gemeinsamen Radialebene 35a, 35b, angeordnet.

Fig. 2 macht deutlich, dass jeweils ein abtriebsseitiges Befestigungsmittel (z. B. 16a) relativ zu dem antriebsseitigen Befestigungsmittel (15b) eines Verbindungselementes (19b) unter einem Umfangswinkel w voneinander beabstandet ist, der bei dem Ausführungsbeispiel genau 90° beträgt.

Auch die übrigen, jeweils einander gegenüberliegenden antriebsseitigen Befestigungsmittel und abtriebsseitigen Befestigungsmittel der anderen Verbindungselemente 19a, 19c sind - soweit sie jeweils einem Verbindungselement zugehörig sind - jeweils um 90° voneinander Umfangsbeabstandet.

Durch diesen besonderen Umfangsabstand gelingt die Ausbildung eines Gleichlaufgelenkes mit den beschriebenen vorteilhaften Eigenschaften.

Anhand der Figuren 4 bis 9 soll nun eine konkrete, besonders vorteilhafte Ausgestaltung eines Verbindungselementes 19, des sogenannten Lenkers, detaillierter erörtert werden:
Bereits die perspektivische Ansicht der Fig. 4 lässt erkennen, dass der Lenker 19 im Wesentlichen hantelförmig oder knochenförmig ausgebildet ist, mit einem ersten, im Wesentlichen ballig ausgeformten Ende 33 und einem zweiten, im Wesentlichen ballig ausgeformten Ende 34. Des Weiteren weist der Lenker 19 einen Mittelabschnitt 40 auf, der gegenüber den beiden balligen Enden 33, 34 schmal ausgestaltet ist, so dass sich eine Hantel- oder Knochenform ergibt. Der Mittelabschnitt 40 weist darüber hinaus eine Querschnittsverjüngung 37 oder Querschnittsschwächung auf, auf die später noch detaillierter eingegangen wird:

Unter Rückgriff auf Fig. 1a, insbesondere auf die dort rechts dargestellte Kupplungseinheit 10a, soll beispielhaft angedeutet werden, dass das Verbindungselement 19b über eine erste Gelenkverbindung 20a mit dem antriebsseitigen Befestigungsmittel 15b und über eine zweite Gelenkverbindung 20b mit dem abtriebsseitigen Befestigungsmittel 16a verbunden ist.

Diese Gelenkverbindungen 20a, 20b bestehen jeweils, wie nun nachfolgend anhand der Figuren 4 bis 9 erläutert wird, aus drei in Reihe geschalteten Gelenken 21, 22 und 23.

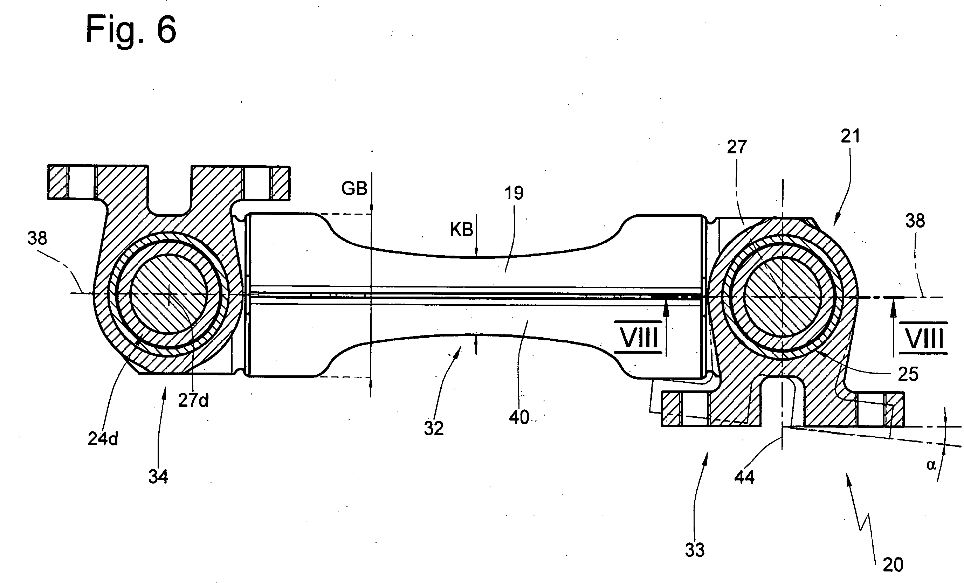

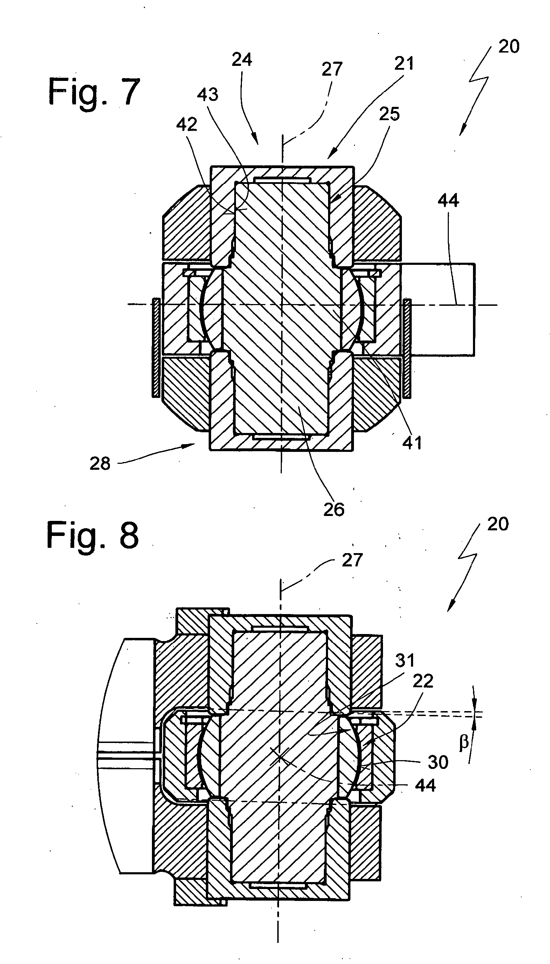

Das erste Gelenk 21 ist bei dem Ausführungsbeispiel als Drehlager 24 ausgebildet, und wird zunächst anhand der Figuren 6 und 7 veranschaulicht: Das Drehlager 24 umfasst eine Lagerschale 25, die fest relativ zu dem antriebsseitigen Befestigungsmittel angeordnet ist. Bezogen auf den Lenker 19b der Fig. 1a ist also die Lagerschale 25 der Gelenkverbindung 20a dieses Lenkers 19b fest relativ zu dem antriebsseitigen Befestigungsmittel 15b angeordnet, welches in den Figuren 6 und 7 nicht dargestellt ist.

Innerhalb der Lagerschale 25 ist eine um die Drehlagerachse 27 rotierbare Lagerwelle 26 angeordnet. Die Lagerwelle 26 ist ein im Wesentlichen zylindrischer Körper, der einen Ausbuchtungsbereich 41 aufweist.

Im Ausbuchtungsbereich 41 ist die Lagerwelle 26 verbreitert, und ragt aus der Lagerschale 25 quer zur Drehlagerachse 27 heraus.

Das Drehlager 24 lässt eine Drehbewegung der Lagerwelle 26 nur um die Drehlagerachse 27 zu, nicht aber um eine weitere Achse.

Das Drehlager 24 ist als sogenanntes Wälzlager ausgebildet. Dies bedeutet, dass zwischen der Außenseite 42 der Lagerwelle 26 und der Innenseite 43 der Lagerschale 25 mehrere Wälzelemente, insbesondere Kugeln oder, bei einem bevorzugten Ausführungsbeispiel, Zylinderrollen angeordnet sind. Unter Verwendung von Zylinderrollen, man spricht auch von Nadeln, ist das so gebildete Wälzlager 28 bei dem vorteilhaften Ausführungsbeispiel als sogenanntes Nadellager ausgebildet.

Eine Drehung der Lagerwelle 26 um die Drehachse 27 herum erfolgt insoweit unter Rotation zahlreicher, bei dem Ausführungsbeispiel der Fig. 7 nicht dargestellter Zylinderrollen.

Das zweite Gelenk 22 ist von einem Kugelflächenabschnitt 30 gebildet, der an dem Ausbuchtungsbereich 41 angeordnet ist. Der Kugelflächenabschnitt 30 wird von einem Ösenabschnitt 31 übergriffen, der wiederum fest relativ zum Mittelabschnitt 40 des Lenkers angeordnet ist.

Der Kugelflächenabschnitt 30 lässt innerhalb gewisser, geringer Winkelbereiche eine sphärische Bewegung zu. Vor allem lässt das durch Kugelflächenabschnitt 30 und Ösenabschnitt 31 gebildete zweite Gelenk 22 eine Drehbewegung des Mittelabschnittes 40 des Verbindungselementes 19 relativ zu der Lagerwelle 26 um eine mit 44 in den Figuren 6 und 8 bezeichnete Drehachse zu. Die Drehachse 44 steht senkrecht zu der Drehlagerachse 27.

Schließlich weist die Gelenkverbindung 20 noch ein drittes Gelenk 23 auf, welches von einem Biegegelenk oder Torsionsgelenk 32 bereitgestellt ist.

Die Bereitstellung einesTorsionsgelenkes wird durch eine Querschnittsverjüngung 37 des Lenkers begünstigt.

Fig. 6 zeigt, dass im Bereich der Enden 33, 34 der Lenker 19 eine Breite GB besitzt, die erheblich größer ist als die Breite KB in der Mitte des Lenkers 19, bezogen auf seine Längsmittelachse 38.

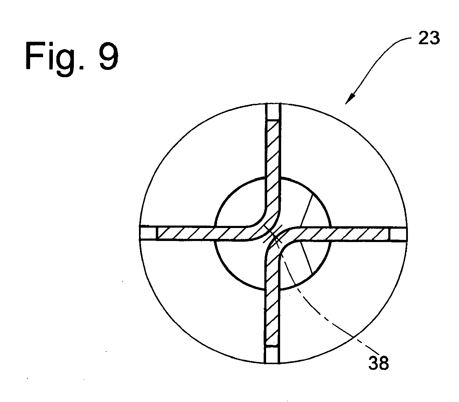

Durch die Schwächung des Querschnittes des Lenkers 19 exakt im Bereich seiner Mitte (bei 37) ist das Lenkerelement 19 insgesamt drehweich und um seine Längsmittelachse 38 tordierbar ausgestaltet. Konkret wird bei dem in Fig. 9 dargestellten Ausführungsbeispiel eines Verbindungselementes, dessen drehweiche Ausgestaltung durch die Verwendung von zwei im Wesentlichen rechtwinkeligen, nach außen hin offenen Profilen bereitgestellt.

Während bei weiteren, nicht dargestellten Ausführungsbeispielen die beschriebene Querschnittsschwächung in dem Mittelbereich des Verbindungselementes nicht zwingend vorgesehen sein muss, ist beim Ausführungsbeispiel durch die Anordnung der mittigen Querschnittsverjüngung die tordierbare Ausgestaltung zumindest begünstigt. Das eine Ende 34 des Lenkers 19 ist insoweit beim Betrieb der Kupplungseinheit 10 relativ zu dem zweiten Ende 34 des Lenkers innerhalb eines vorgegebenen Winkelbereiches, bezogen auf die Längsmittelachse 38, tordierbar, d. h. relativ verdrehbar.

Die Gelenkverbindung 20 ist bei dem Ausführungsbeispiel von einem ersten, als Radiallager gebildeten Drehgelenk 24, einem zweiten, als sphärisches Gelenk ausgebildetes Gelenk 22 und von einem dritten, als Torsionsgelenk ausgebildeten Gelenk 23 bereitgestellt, wobei diese drei Gelenke in Reihe geschaltet sind.

Die drei Drehachsen 27, 44, 38, die von den drei unterschiedlichen Gelenken 21, 22, 23 bereitgestellt werden, stehen sämtlich aufeinander senkrecht. Die drei Drehachsen oder Gelenkachsen 27, 44, 38 schneiden sich alle in einem Punkt, dem sogenannten Gelenkpunkt.

Dem Fachmann ist deutlich, dass auch andere Ausbildungen und Reihenschaltungen von derartigen Gelenken von der Erfindung umfasst sind.

Bezüglich der Ausbildung des zweiten Gelenkes 22, wie insbesondere in den Figuren 7 und 8 dargestellt, sei angemerkt, dass hierdurch vornehmlich eine Verkippung des Verbindungselementes um die Kippachse oder Drehachse 44 erreicht wird. Eine grundsätzlich, bei derartigen Gelenken 22, die sphärische Kugelflächenabschnitte 30 verwenden, mögliche Drehbewegung um die Drehachse 27 des ersten Gelenkes 21, wird in der Regel im Betrieb nicht stattfinden, da die Reibung zwischen den Abschnitten 30 und 31 erheblich höher ist, als die mit einer Drehbewegung des Wälzlagern 21 um die Drehachse 27 einhergehende Reibung.

Die Erfindung erkennt, dass bei gattungsgemäßen Kupplungseinheiten 10 ein typischer Arbeitswinkel beim Betrieb der Kupplung um die Drehlagerachse 27 relativ groß sein kann. So ist beispielsweise der in Fig. 6 zwischen der Lagerschale 25 in gestrichelten und in durchgezogenen Linien dargestellte Arbeitswinkel a etwa 5° bis 9°, insbesondere etwa 6° groß, und soll veranschaulichen, dass hier große Arbeitswinkel zu erwarten sind.

Aus diesem Grunde sind, was insbesondere auch die Fig. 6 erkennen lässt, an einem Lenker 19 die beiden Drehlagerachsen 27, 27d an den beiden Gelenkverbindungen 20a, 20b parallel zueinander ausgerichtet.

Zudem bietet es sich an, diese Drehlager 24, 24d als Wälzlager auszubilden.

Demgegenüber ist als Arbeitswinkel um die Drehachse 44 beim Betrieb der Kupplung nur ein sehr geringer Winkel β, der sogenannte Kippwinkel, von beispielsweise 0,05° bis 2°, insbesondere ein Winkel zwischen 1° und 2°, oder - je nach Ausführungsbeispiel - ein Winkel von etwa zwischen 0,1° und 0,4°, zu erwarten.

Schließlich ist bezogen auf die Längsmittelachse 38 des Lenkers 19 ebenfalls nur eine geringe Tordierung, bei einem Arbeitswinkel von etwa 1° bis 2°, zu erwarten. Es kann je nach Ausführungsform aber auch vorgesehen sein, dass hier die größten Arbeitswinkel, von z. B. zwischen 6° und 15°, Anwendung finden.

Die genauen Winkel sind selbstverständlich abhängig von den gewählten Dimensionen, z. B. von der Länge der Lenker, von der Einbaulänge der Kupplung, von den auszugleichenden Radialwinkel- und Axialversätzen und von der Größe der zu übertragenden Drehmomente, sowie letztendlich auch noch von der Drehzahl.

Schließlich besteht insbesondere auch noch die Möglichkeit, das vom Kugelflächenabschnitt 30 und Ösenabschnitt 31 gebildete Gelenk 22 durch ein weiteres Drehlager, welches eine Drehung nur um eine einzige Drehachse 44 zulässt, zu ersetzen.

Schließlich kann auch das Torsionsgelenk 32 durch ein solches Drehgelenk ersetzt werden.

Die in den Zeichnungen dargestellte Ausgestaltung der Erfindung ist ) insbesondere für schnelldrehende Kupplungen, d. h. für Kupplungseinheiten 10 geeignet, die mit hohen Drehzahlen arbeiten und hohe Drehmomente übertragen.

Die in der nachveröffentlichten Patentanmeldung des Standes der Technik beschriebene sphärische Gelenkverbindung, die drei rotatorische Freiheitsgrade ermöglicht, wird erfindungsgemäß auf drei Gelenke, die jeweils einzeln einen rotatorischen Freiheitsgrad zulassen, funktional aufgesplittet.

Die Reihenschaltung von Gelenken in der beschriebenen erfindungsgemäßen Art ermöglicht aber gleichermaßen, dass ein Ende des Lenkers relativ zu der an dem anderen Ende dieses Lenkers festgelegten antriebsseitigen oder abtriebsseitigen Befestigungsstelle innerhalb vorgegebener Grenzen, unter Ausnutzung der drei rotatorischen Freiheitsgrade, jeden beliebigen Raumpunkt einnehmen kann.

Schließlich sei an dieser Stelle darauf hingewiesen, dass anstelle der beschriebenen Dreh- und Torsionsgelenke auch Axiallager, d. h. Schubgelenke, zum Einsatz kommen können. Auch können unter Umständen auch Elastomer-Elemente als Lagerbestandteile eingesetzt werden.

Im Unterschied zu dem vorbeschriebenen, sphärischen Gelenk und zur Bereitstellung der mehreren rotatorischen Freiheitsgrade ist erfindungsgemäß zumindest eine Reihenschaltung von zwei unterschiedlichen Lagern vorgesehen.

Soweit in dieser Patentanmeldung die Begriffe Pendelkugellager oder Pendelrollenlager verwendet werden, kann auf deren im Stand der Technik übliche Definition verwiesen werden. Es handelt sich um Lager, die neben einer Rotation um die Mittelachse auch eine Verschwenkung oder Verkippung um wenige Winkelgrade um eine Achse senkrecht zur Mittelachse aus einer Mittelstellung heraus ermöglichen.

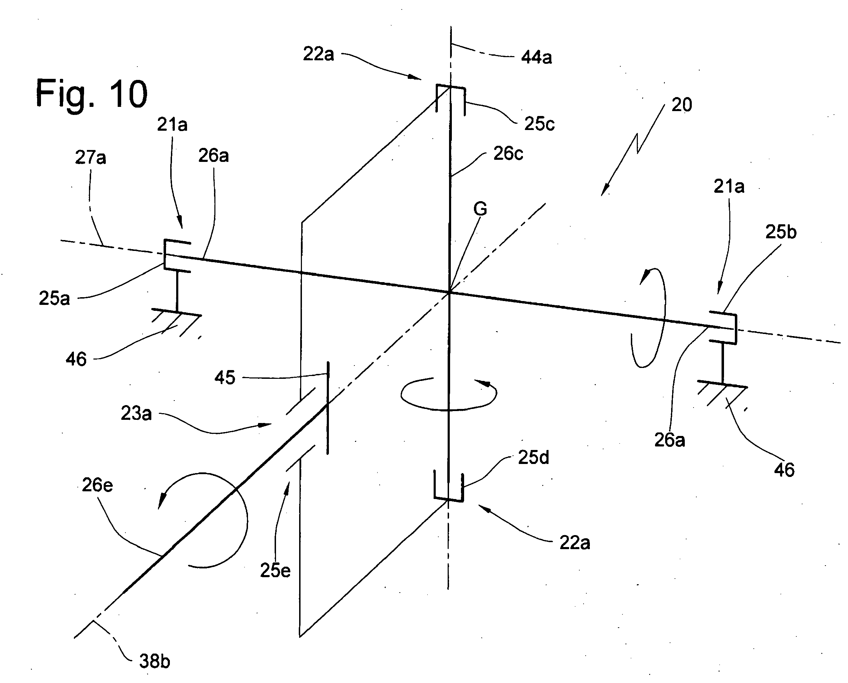

Bezogen auf die sehr schematische Darstellung der Fig. 10 soll nun noch verdeutlicht werden, dass das erste Gelenk 21a einer Gelenkverbindung 20, sowie deren zweites Gelenk 22a und deren drittes Gelenk 23a von konstruktiv beliebig ausgestalteten Lagern gebildet sein können.

So zeigt Fig. 10 in einer sehr schematischen, blockschaltbildartigen Darstellung, dass die Gelenkverbindung 20 ein erstes Gelenk 21a umfassen kann, welches aus einer endseitig (d. h. befestigungsmittelseitig) festgehaltenen Lagerschale 25a, 25b gebildet sein kann. In der so gebildeten Lagerschale 25a, 25b ist, um eine geometrische Drehachse 27a drehbar, eine Lagerwelle 26a gelagert.

Die Lagerwelle 26a ist bewegungseinheitlich verbunden mit einer weiteren Lagerwelle 26c. Diese ist ihrerseits in einer weiteren Lagerschale, gebildet durch die Lagerschalenteile 25c, 25d, um die geometrische Drehachse 44a relativ zu der Lagerschale 25c, 25d drehbar, gelagert.

Die Lagerschalenteile 25c, 25d sind ihrerseits mit einer Lagerschale 25e drehfest verbunden. Die Lagerschale 25e stellt ein Drehlager für eine weitere Lagerwelle 26e bereit. Diese ist relativ zu der Lagerschale 25e um eine geometrische Achse 38b drehbar.

Die geometrischen Drehachsen 27a, 44a und 38b stehen sämtlich zueinander senkrecht und schneiden sich alle in dem Gelenkpunkt G.

Wie die einzelnen Lager konkret ausgebildet sind, bleibt dem einzelnen Ausführungsbeispiel vorbehalten. Entscheidend ist, dass diese Serienschaltung der Reihenschaltung von Gelenken oder Lagern 21a, 22a, 23a drei rotatorische Freiheitsgrade der Lagerwelle 26e relativ zu der Befestigungsstelle 46 ermöglicht. Die Befestigungsstelle 46 entspricht dabei dem antriebsseitigen oder abtriebsseitigen Befestigungsmittel 15, 16. Die Lagerwelle 26e entspricht bei dieser Betrachtung dem der vorgenannten antriebsseitigen oder abtriebsseitigen Befestigungsstelle 15, 16 fern angeordneten, anderen Endbereich des entsprechenden Verbindungselementes oder Lenkers.

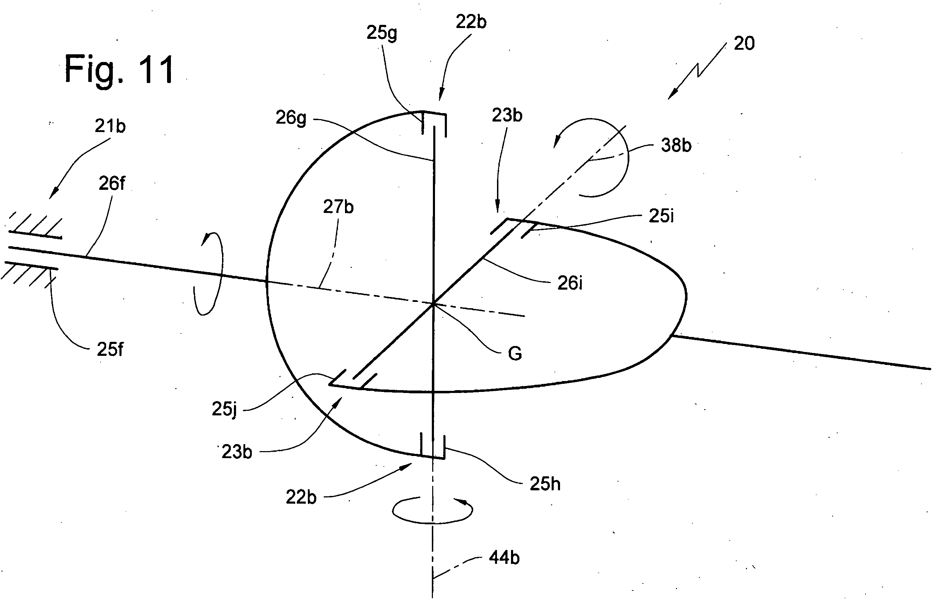

Fig. 11 zeigt in einer weiteren schematischen Prinzip-Darstellung ein Ausführungsbeispiel einer Gelenkverbindung 20, bei der ein erstes Gelenk 21 b von einer Lagerschale 25f bereitgestellt ist, in der eine Lagerwelle 26f um eine geometrische Achse 27b drehbar angeordnet ist. Die Lagerwelle 26f ist mit Lagerschalenteilen 25g und 25h eines zweiten Gelenkes 22b fest verbunden. In dem von den Lagerschalen 25g, 25h bereitgestellten Lager bzw. relativ zu diesem ist eine Lagerwelle 26g um die geometrische Achse 44b drehbar.

Die Lagerwelle 26g wiederum ist fest verbunden mit einer Lagerwelle 26i. Diese ist relativ zu einem aus Lagerschalenteilen 25i und 25j bereitgestellten Lager um eine geometrische Achse 38b drehbar. Wiederum schneiden sich die drei geometrischen Drehachsen 27b, 44b und 38b in einem Gelenkpunkt G.

Auch bei diesem Ausführungsbeispiel wird eine Gelenkverbindung 20 bereitgestellt, die drei rotatorische Freiheitsgrade ermöglicht. Wiederum kommt es auf die konkrete konstruktive Ausgestaltung der einzelnen Lager zur Bereitstellung einer Gelenkverbindung 20 gemäß der Erfindung nicht an.

## Patentansprüche

1. Kupplungseinheit (10, 10a, 10b) zur Übertragung von Drehmomenten von einem Antrieb (11, 11b) auf einen Abtrieb (12, 12a, 12b), wobei die Kupplung eine antriebseitige Anschlussvorrichtung (13), wie Flansch, aufweist, mit einer Mehrzahl antriebsseitiger Befestigungsmittel (15a, 15b, 15c), die um eine, der antriebsseitigen Anschlussvorrichtung zugeordnete, antriebsseitige Rotationsachse (17) herum angeordnet sind, und die eine abtriebsseitige Anschlussvorrichtung (14), wie Flansch, aufweist, mit einer Mehrzahl abtriebsseitiger Befestigungsmittel (16a, 16b, 16c), und mit Verbindungselementen (19, 19a, 19b, 19c), wie Lenkern, die einerseits an einem antriebsseitigen Befestigungsmittel und andererseits an einem abtriebsseitigen Befestigungsmittel mittels einer Gelenkverbindung (20) angeordnet sind, und die Gelenkverbindung von mehreren in Reihe geschalteten Gelenken (21, 22, 23) bereitgestellt ist, **dadurch gekennzeichnet, dass** das antriebsseitige Befestigungsmittel und das mit diesem mittels eines Verbindungselementes gekoppelte abtriebsseitige Befestigungsmittel hinsichtlich der antriebsseitigen Rotationsachse um 80° bis 100°, insbesondere um 85° bis 95°, weiter insbesondere um im wesentlichen 90°, umfangsbeabstandet zueinander angeordnet sind.

2. Kupplüngseinheit nach Anspruch 1, **dadurch gekennzeichnet, dass** wenigstens ein Gelenk (21) von einem Drehlager, insbesondere einem eine Drehbewegung nur um eine Drehlagerachse (27) zulassendes Drehlager (24), bereitgestellt ist.

3. Kupplungseinheit nach Anspruch 2, **dadurch gekennzeichnet, dass** das Drehlager eine Lagerschale (25) und eine darin um eine Drehlagerachse (27) drehbare Lagerwelle (26) aufweist und insbesonderedass die Lagerschale (25) fest relativ zu dem antriebsseitigen Befestigungsmittel (15) oder fest relativ zu dem abtriebsseitigen Befestigungsmittel (16) angeordnet ist.

4. Kupplungseinheit nach einem der Ansprüche 2 bis 3, **dadurch gekennzeichnet, dass** das Drehlager von einem Wälzlager, insbesondere von einem Nadellager, bereitgestellt ist.

5. Kupplungseinheit nach einem der vorangegangenen Ansprüche, **dadurch gekennzeichnet, dass** wenigstens ein Gelenk ein Pendelrollenlager oder ein Pendelkugellager umfasst.

6. Kupplungseinheit nach einem der Ansprüche 2 bis 3, **dadurch gekennzeichnet, dass** die Drehlagerachse (27) im Wesentlichen senkrecht zu der antriebsseitigen Rotationsachse (17) ausgerichtet ist.

7. Kupplungseinheit nach einem der vorangegangenen Ansprüche, **dadurch gekennzeichnet, dass** jeweils ein Verbindungselement (19) ein erstes Drehlager (24) mit einer ersten Lagerschale und einer darin um eine erste Drehlagerachse (27) drehbaren ersten Lagerwelle und ein zweites Drehlager (24d) mit einer zweiten Lagerschale und einer darin um eine zweite Drehlagerachse (27d) drehbaren zweiten Lagerwelle aufweist, wobei die erste Lagerschale fest relativ zu dem antriebsseitigen Befestigungsmittel und wobei die zweite Lagerschale fest relativ zu dem abtriebsseitigen Befestigungsmittel angeordnet ist.

8. Kupplungseinheit nach Anspruch 3, **dadurch gekennzeichnet, dass** die erste Drehlagerachse. (27) und die zweite Drehlagerachse (27d) parallel zueinander ausgerichtet sind.

9. Kupplungseinheit nach Anspruch 3 oder nach einem auf Anspruch 3 rückbezogenen Anspruch, **dadurch gekennzeichnet, dass** die Lagerwelle (26) fest mit einem Kugelflächenabschnitt (30) verbunden ist, wobei insbesondere der Kugelflächenabschnitt von einem Ösenabschnitt (31) des Verbindungselementes (19) übergriffen ist.

10. Kupplungseinheit nach einem der vorangegangenen Ansprüche, **dadurch gekennzeichnet, dass** wenigstens ein Gelenk (23) von einem Torsionsgelenk (32) bereitgestellt ist, wobei insbesondere ein erstes Ende (33) des Verbindungselementes (19) relativ zu einem zweiten Ende (34) des Verbindungselementes um eine Längsmittelachse (38) des Verbindungslementes tordierbar ist.

11. Kupplungseinheit nach einem der vorangegangenen Ansprüche, **dadurch gekennzeichnet, dass** die antriebsseitigen Befestigungsmittel (15a, 15b, 15c) in einer gemeinsamen Radialebene (35a) der antriebsseitigen Rotationsachse (17) angeordnet sind und/oder dass die antriebsseitigen Befestigungsmittel auf einem gemeinsamen Radius (36a, 36b, 36c, 36d) um die antriebsseitige Rotationsachse angeordnet sind.

12. Kupplungseinheit nach einem der vorangegangenen Ansprüche, **dadurch gekennzeichnet, dass** die abtriebsseitige Anschlussvorrichtung (14) eine abtriebsseitige Rotationsachse (18) aufweist, und/oder dass die abtriebsseitigen Befestigungsmittel (16a, 16b, 16c) in einer gemeinsamen Radialebene (35b) der abtriebsseitigen Rotationsachse angeordnet sind.

13. Kupplungseinheit nach Anspruch 12, **dadurch gekennzeichnet, dass** die abtriebsseitigen Befestigungsmittel (16) auf einem gemeinsamen Radius um die abtriebsseitige Rotationsachse (18) angeordnet sind.

14. Kupplungseinheit nach Anspruch 11 und 13, **dadurch gekennzeichnet, dass** der Radius, auf welchem die antriebsseitigen Befestigungsmittel um die antriebsseitige Rotationachse (17) angeordnet sind, und der Radius, auf welchem die abtriebsseitigen Befestigungsmittel um die abtriebsseitige Rotationachse (18) angeordnet sind, betragsmäßig identisch sind.

15. Kupplungseinheit (10, 10a, 10b) zur Übertragung von Drehmomenten von einem Antrieb (11) auf einen Abtrieb (12), insbesondere nach einem der vorangegeangenen Ansprüche, wobei die Kupplung eine antriebseitige Anschlussvorrichtung (13), wie Flansch, aufweist, mit einer Mehrzahl antriebsseitiger Befestigungsmittel (15a, 15b, 15c), die um eine, der antriebsseitigen Anschlussvorrichtung zugeordnete, antriebsseitige Rotationsachse (17) herum angeordnet sind, und die eine abtriebsseitige Anschlussvorrichtung (14), wie Flansch, aufweist, mit einer Mehrzahl abtriebsseitige Befestigungsmittel (16a, 16b, 16c), und mit Verbindungselementen (19, 19a, 19b, 19c), wie Lenkern, die einerseits an einem antriebsseitigen Befestigungsmittel und andererseits an einem abtriebsseitigen Befestigungsmittel mittels einer Gelenkverbindung (20) angeordnet sind, und die Gelenkverbindung (20) ein eine Drehbewegung nur um eine Drehlagerachse (27) zulassendes Drehlager (24) und/oder ein Pendelrollenlager und/oder ein Pendelkugellager aufweist, **dadurch gekennzeichnet, dass** das antriebsseitige Befestigungsmittel und das mit diesem mittels eines Verbindungselementes gekoppelte abtriebsseitige Befestigungsmittel hinsichtlich der antriebsseitigen Rotationsachse um 80° bis 100°, insbesondere um 85° bis 95°, weiter insbesondere um im Wesentlichen 90°, umfangsbeabstandet zueinander angeordnet sind.

## Claims

1. Coupling unit (10, 10a, 10b) for transmitting torques from a drive (11, 11b) to an output (12, 12a, 12b), the coupling comprising a drive-side connector device (13), such as a flange, having a plurality of drive-side fixing means (15a, 15b, 15c) disposed around a drive-side axis of rotation (17) assigned to the drive-side connector device, and comprising an output-side connector device (14), such as a flange, having a plurality of output-side fixing means (16a, 16b, 16c), and having connecting elements (19, 19a, 19b, 19c), such as connecting rods, which are disposed on the one hand on a drive-side fixing means and on the other hand on an output-side fixing means by means of an articulated joint (20), and the articulated joint is provided in the form of several joints (21, 22, 23) connected in series, **characterised in that** the drive-side fixing means and the output-side fixing means coupled with the latter by means of a connecting element are disposed circumferentially spaced apart from one another relative to the drive-side axis of rotation by 80° to 100°, in particular by 85° to 95°, more particularly by substantially 90°.

2. Coupling unit as claimed in claim 1, **characterised in that** at least one joint (21) is provided in the form of a pivot bearing, in particular a pivot bearing (24) permitting a rotating movement about only one pivot bearing axis (27).

3. Coupling unit as claimed in claim 2, **characterised in that** the pivot bearing comprises a bearing shell (25) and a bearing shaft (26) rotatable therein about a pivot bearing axis (27) and in particular the bearing shell (25) is disposed in a fixed arrangement relative to the drive-side fixing means (15) or in a fixed arrangement relative to the output-side fixing means (16).

4. Coupling unit as claimed in one of claims 2 to 3, **characterised in that** the pivot bearing is provided in the form of a roller bearing, in particular a needle roller bearing.

5. Coupling unit as claimed in one of the preceding claims, **characterised in that** at least one joint comprises a self-aligning roller bearing or a self-aligning spherical bearing.

6. Coupling unit as claimed in one of claims 2 to 3, **characterised in that** the pivot bearing axis (27) is oriented substantially perpendicular to the drive-side axis of rotation (17).

7. Coupling unit as claimed in one of the preceding claims, **characterised in that** a connecting element (19) respectively comprises a first pivot bearing (24) with a first bearing shell and a first bearing shaft rotatable therein about a first pivot bearing axis (27) and a second pivot bearing (24d) with a second bearing shell and a second bearing shaft rotatable therein about a second pivot bearing axis (27d), and the first bearing shell is disposed in a fixed arrangement relative to the drive-side fixing means and the second bearing shell is disposed in a fixed arrangement relative to the output-side fixing means.

8. Coupling unit as claimed in claim 3, **characterised in that** the first pivot bearing axis (27) and the second pivot bearing axis (27d) are oriented parallel with one another.

9. Coupling unit as claimed in claim 3 or a claim dependent on claim 3, **characterised in that** the bearing shaft (26) is fixedly connected to a spherical surface portion (30), and in particular an eye portion (31) of the connecting element (19) engages over the spherical surface portion.

10. Coupling unit as claimed in one of the preceding claims, **characterised in that** at least one joint (23) is provided in the form of a torsion joint (32), and in particular a first end (33) of the connecting element (19) can be twisted relative to a second end (34) of the connecting element about a longitudinal centre axis (38) of the connecting element.

11. Coupling unit as claimed in one of the preceding claims, **characterised in that** the drive-side fixing means (15a, 15b, 15c) are disposed in a common radial plane (35a) of the drive-side axis of rotation (17) and/or the drive-side fixing means are disposed on a common radius (36a, 36b, 36c, 36d) about the drive-side axis of rotation.

12. Coupling unit as claimed in one of the preceding claims, **characterised in that** the output-side connector device (14) has an output-side axis of rotation (18) and/or the output-side fixing means (16a, 16b, 16c) are disposed in a common radial plane (35b) of the output-side axis of rotation.

13. Coupling unit as claimed in claim 12, **characterised in that** the output-side fixing means (16) are disposed on a common radius about the output-side axis of rotation (18).

14. Coupling unit as claimed in claims 11 and 13, **characterised in that** the radius on which the drive-side fixing means are disposed about the drive-side axis of rotation (17) and the radius on which the output-side fixing means are disposed about the output-side axis of rotation (18) are identical in terms of size.

15. Coupling unit (10, 10a, 10b) for transmitting torques from a drive (11) to an output (12), in particular as claimed in one of the preceding claims, the coupling comprising a drive-side connector device (13), such as a flange, having a plurality of drive-side fixing means (15a, 15b, 15c) disposed around a drive-side axis of rotation (17) assigned to the drive-side connector device, and comprising an output-side connector device (14), such as a flange, having a plurality of output-side fixing means (16a, 16b, 16c), and having connecting elements (19, 19a, 19b, 19c), such as connecting rods, which are disposed on the one hand on a drive-side fixing means and on the other hand on an output-side fixing means by means of an articulated joint (20), and the articulated joint (20) comprises a pivot bearing (24) permitting a rotating movement about only one pivot bearing axis (27) and/or a self-aligning roller bearing and/or a self-aligning spherical bearing, **characterised in that** the drive-side fixing means and the output-side fixing means coupled with the latter by means of a connecting element are disposed circumferentially spaced apart from one another relative to the drive-side axis of rotation by 80° to 100°, in particular by 85° to 95°, more particularly by substantially 90°.

## Revendications

1. Unité d'embrayage (10, 10a, 10b) pour transmettre des couples d'un entraînement (11, 11b) à une sortie (12, 12a, 12b), l'embrayage présentant un dispositif de liaison (13) côté entraînement, comme une bride, avec une pluralité de moyens de fixation (15a, 15b, 15c) côté entraînement qui sont disposés autour d'un axe de rotation (17) côté entraînement, associé au dispositif de liaison côté entraînement, et qui présente un dispositif de liaison (14) côté sortie, comme une bride, avec une pluralité de moyens de fixation (16a, 16b, 16c) côté sortie, et avec des éléments de liaison (19, 19a, 19b, 19c), tels que des bras de commande, qui sont disposés, d'une part, au niveau d'un moyen de fixation côté entraînement, et, d'autre part, au niveau d'un moyen de fixation côté sortie, à l'aide d'une liaison articulée (20) et la liaison articulée étant assurée par plusieurs articulations (21, 22, 23) montées en série, **caractérisée en ce que** le moyen de fixation côté entraînement et le moyen de fixation côté sortie couplé à celui-ci au moyen d'un élément de liaison sont disposés, espacés circonférentiellement l'un de l'autre, en ce qui concerne l'axe de rotation côté entraînement, de 80° à 100°, en particulier de 85° à 95°, et encore en particulier de 90° essentiellement.

2. Unité d'embrayage selon la revendication 1, **caractérisée en ce qu'**au moins, une articulation (21) est fournie par un palier rotatif, en particulier un palier rotatif (24) autorisant un mouvement de rotation uniquement autour d'un axe de palier rotatif (27).

3. Unité d'embrayage selon la revendication 2, **caractérisée en ce que** le palier rotatif présente une coque de palier (25) et un arbre de palier (26) pouvant tourner dedans autour d'un axe de palier rotatif (27) et en particulier **en ce que** la coque de palier (25) est disposée fixement par rapport au moyen de fixation (15) côté entraînement ou fixement par rapport au moyen de fixation (16) côté sortie.

4. Unité d'embrayage selon l'une des revendications 2 à 3, **caractérisée en ce que** le palier rotatif est fourni par un palier à roulement, en particulier par un roulement à aiguilles.

5. Unité d'embrayage selon l'une des précédentes revendications, **caractérisée en ce qu'**au moins une articulation comprend un roulement à rouleaux articulé ou un roulement à billes articulé.

6. Unité d'embrayage selon l'une des revendications 2 à 3, **caractérisée en ce que** l'axe de palier rotatif (27) est dirigé essentiellement perpendiculairement à l'axe de rotation (17) côté entraînement.

7. Unité d'embrayage selon l'une des précédentes revendications, **caractérisée en ce qu'**à chaque fois, un élément de liaison (19) présente un premier palier rotatif (24) avec une première coque de palier et un premier arbre de palier pouvant tourner dedans autour d'un premier axe de palier rotatif (27) et un deuxième palier rotatif (24d) avec une deuxième coque de palier et un deuxième arbre de palier pouvant tourner dedans autour d'un deuxième axe de palier rotatif (27d), la première coque de palier étant disposée fixement par rapport au moyen de fixation côté entraînement et la deuxième coque de palier étant disposée fixement par rapport au moyen de fixation côté sortie.

8. Unité d'embrayage selon la revendication 3, **caractérisée en ce que** le premier axe de palier rotatif (27) et le deuxième axe de palier rotatif (27d) sont dirigés parallèlement l'un à l'autre.

9. Unité d'embrayage selon la revendication 3 ou selon l'une des revendications en référence à la revendication 3, **caractérisée en ce que** l'arbre de palier (26) est relié fixement avec une section de surface sphérique (30), la section de surface sphérique étant en particulier recouverte par une section d'oeillet (31) de l'élément de liaison (19).

10. Unité d'embrayage selon l'une des précédentes revendications, **caractérisée en ce qu'**au moins une articulation (23) est fournie par une articulation de torsion (32), une première extrémité (33) de l'élément de liaison (19) pouvant, en particulier, être tordue, par rapport à une deuxième extrémité (34) de l'élément de liaison, autour d'un axe médian longitudinal (38) de l'élément de liaison.

11. Unité d'embrayage selon l'une des précédentes revendications, **caractérisée en ce que** les moyens de fixation (15a, 15b, 15c) côté entraînement sont disposés dans un plan radial (35a) commun de l'axe de rotation (17) côté entraînement, et/ou **en ce que** les moyens de fixation côté entraînement sont disposés sur un rayon (36a, 36b, 36c, 36d) commun autour de l'axe de rotation côté entraînement.

12. Unité d'embrayage selon l'une des précédentes revendications, **caractérisée en ce que** le dispositif de liaison (14) côté sortie présente un axe de rotation (18) côté sortie, et/ou **en ce que** les moyens de fixation (16a, 16b, 16c) côté sortie sont disposés dans un plan radial (35b) commun de l'axe de rotation côté sortie.

13. Unité d'embrayage selon la revendication 12, **caractérisée en ce que** les moyens de fixation (16) côté sortie sont disposés sur un rayon commun autour de l'axe de rotation (18) côté sortie.

14. Unité d'embrayage selon la revendication 11 et 13, **caractérisée en ce que** le rayon, sur lequel les moyens de fixation côté entraînement sont disposés autour de l'axe de rotation (17) côté entraînement, et le rayon, sur lequel les moyens de fixation côté sortie sont disposés autour de l'axe de rotation (18) côté sortie, sont identiques en quantité.

15. Unité d'embrayage (10, 10a, 10b) pour transmettre des couples d'un entraînement (11) à une sortie (12), en particulier selon l'une des précédentes revendications, l'embrayage présentant un dispositif de liaison (13) côté entraînement, comme une bride, avec une pluralité de moyens de fixation (15a, 15b, 15c) côté entraînement qui sont disposés autour d'un axe de rotation (17) côté entraînement, associés au dispositif de liaison côté entraînement, et qui présente un dispositif de liaison (14) côté sortie, comme une bride, avec une pluralité de moyens de fixation (16a, 16b, 16c) côté sortie, et avec des éléments de liaison (19, 19a, 19b, 19c), tels que des bras de commande, qui sont disposés, d'une part, au niveau d'un moyen de fixation côté entraînement, et, d'autre part, au niveau d'un moyen de fixation côté sortie à l'aide d'une liaison articulée (20) et la liaison articulée (20) présentant un palier rotatif (24) autorisant un mouvement de rotation uniquement autour d'un axe de palier rotatif (27) et/ou un roulement à rouleaux articulé et/ou un roulement à billes articulé, **caractérisée en ce que** le moyen de fixation côté entraînement et le moyen de fixation côté sortie couplé à celui-ci au moyen d'un élément de liaison sont disposés, espacés circonférentiellement l'un de l'autre, en ce qui concerne l'axe de rotation côté entraînement, de 80° à 100°, en particulier de 85° à 95°, et encore en particulier de 90° essentiellement.
